# EUROPÄISCHE PATENTSCHRIFT

(11) **EP 0 530 479 B1**
(45) Veröffentlichungstag und Bekanntmachung des Hinweises auf die Patenterteilung: **28.06.1995**
(21) Anmeldenummer: 92112310.5
(22) Anmeldetag: 18.07.1992
(51) Int. Cl.: A01B 71/06, B62D 49/06

(54) **Vorrichtung zum Verbinden eines Landwirtschaftlichen Gerätes mit einem Traktor.**
Device for linking an agricultural machine to a tractor.
Dispositif de liaison d'une machine agricole avec un tracteur.

(30) Priorität: 06.09.1991 DE 4129725
(43) Veröffentlichungstag der Anmeldung: 10.03.1993
(73) Patentinhaber: GKN Walterscheid GmbH, D-53784 Lohmar (DE)
(72) Erfinder: Roth, Andreas, W-5206 Neunkirchen - Seelscheid 1 (DE); Dohm, Egbert, W-5060 Overath 5 (DE)
(74) Vertreter: Harwardt, Günther, Dipl.-Ing.

(56) Entgegenhaltungen:
- EP-A- 0 027 295
- EP-A- 0 196 263
- EP-A- 0 512 326
- GB-A- 828 029
- US-A- 4 793 430

## Beschreibung

Die Erfindung betrifft eine Vorrichtung zum Verbinden eines landwirtschaftlichen Gerätes mit einem Traktor, von dem es gezogen und durch eine Zapfwelle angetrieben wird, mit einem Doppelgetriebe, das zwei übereinander angeordnete und zueinander über eine Lagerung um eine erste Achse verschwenkbare und drehmäßig verbundene Winkelgetriebe umfaßt, wobei ein Winkelgetriebe einen Antriebszapfen zur Verbindung mit der Zapfwelle des Traktors mittels einer Antriebswelle und das andere Winkelgetriebe einen dazu parallelen Abtrieb zur Weiterleitung der Drehbewegung an das Gerät aufweist, mit einer Traverse zur schwenkbaren Verbindung des Doppelgetriebes mit den Unterlenkern des Traktors um eine die erste Achse mit Abstand in einem rechten Winkel kreuzende zweite Achse, mit Mitteln zur Verbindung des Doppelgetriebes mit dem Gerät und mit Mitteln, die ein Verschwenken des Gerätes um eine dritte Achse, die jeweils die beiden anderen Achsen kreuzt, zulassen.

Eine solche Ausbildung ist in der EP 0 027 295 B1 beschrieben. Von Nachteil bei den dort beschriebenen Ausbildungsvarianten mit Doppelgetrieben ist, daß die Schwenkverbindung um die dritte Achse, die eine Schwenkung des angehängten Gerätes im Gelände im wesentlichen um eine Achse, die parallel zur Traktorlängsachse verläuft, zulassen soll, dem von der Zapfwelle angetriebenen Antriebszapfen oder dem Abtrieb zum Gerät hin zugeordnet ist. Die Funktion der Winkelgetriebe und die Lagerung deren Bauteile wird hierdurch negativ beeinflußt, weil in erheblichem Maße Biegemomente auf Getriebeteile einwirken.

In der EP-A-0196263 ist ebenfalls eine Vorrichtung zum Verbinden eines landwirtschaftlichen Gerätes mit einem Traktor, von dem es gezogen und durch dessen Zapfwelle es angetrieben wird, beschrieben, bei der eine Verstellung des Gerätes zum Tranktor um drei Achsen möglich ist. Zur Erzielung einer Verstellmöglichkeit des Gerätes, zum Traktor um eine zur Längsachse des Traktors parallele Achse sind die freien Enden einer Traverse mit den beiden Unterlenkern mittels Gelenklaschen verbunden. Ferner ist die Traverse im Bereich der Lagerung der beiden Winkelgetriebe zueinander fest angebracht. Die beiden Laschen sind jeweils mit einem Ende um einen Bolzen schwenkbar mit einem Unterlenker und einem freien Ende der Traverse verbunden, wobei die Schwenkverstellung zur Traverse begrenzt ist. Eine solche Anlenkung kann lediglich geringe Verstellungen zulassen, da der Schwenkweg der Laschen eng begrenzt sein muß, weil die Laschen auch die Stützung des Gerätes zum Traktor bewirken. Aufgrund der geringen Schwenkbewegungsmöglichkeit können bei unebenem Gelände Zwangskräfte auftreten, welche das Doppelgetriebe beanspruchen.

In der US-A-4793430 ist eine Vorrichtung zum Verbinden eines landwirtschaftlichen Gerätes mit einem Traktor beschrieben, bei der die Zuganhängung mittels eines, eine allseitige Bewegung zulassenden Kugelgelenkes erfolgt, während die Weiterleitung der Drehbewegung von der Zapfwelle des Traktors zum Gerät mittels eines Doppelgetriebes erfolgt, das aus zwei Winkelgetrieben in Übereinanderanordnung besteht. Der Gelenkmittelpunkt des Kugelgelenkes ist auf der Verlängerung der Schwenkachse der beiden Winkelgetriebe zueinander angeordnet. Zusätzlich ist eine Anordnung mit einer mechanischen Steuerung der Ausrichtung des unteren Winkelgetriebes erforderlich.

Der Erfindung liegt die Aufgabe zugrunde, eine Vorrichtung zum Verbinden eines landwirtschaftlichen Gerätes mit einem Traktor, von dem es gezogen und angetrieben wird, zu schaffen, bei der die der Drehmomentweiterleitung dienenden Getriebeteile des Doppelgetriebes und deren Lagerung einer möglichst geringen Beanspruchung von Biegemomenten aus der Zuganhängung unterworfen sind.

Diese Aufgabe wird erfindungsgemäß dadurch gelöst, daß ein Haltebügel vorgesehen ist, daß der Haltebügel derart mit dem Doppelgetriebe verbunden ist, daß mindestens eines der beiden Winkelgetriebe zum Haltebügel um die erste Achse verschwenkbar ist, daß der Haltebügel mit einem Ende an der Lagerung der beiden Winkelgetriebe des Doppelgetriebes angebracht ist, eines der beiden Winkelgetriebe übergreift und das andere mit diesem Winkelgetriebe durch eine Stützlagerung verbunden ist, welche eine Relativverschwenkung des Winkelgetriebes zu dem Haltebügel um die erste Achse zuläßt, und daß der Haltebügel mit der Traverse um die dritte Achse schwenkbar verbunden ist.

Von Vorteil bei dieser Ausbildung ist, daß eine Krafteinleitung erzielbar ist, die dafür sorgt, daß keine oder nur geringe Biegemomente auf Getriebebauteile ausgeübt werden. Hierdurch ist es möglich, die Lagerung günstiger zu gestalten bzw. die Lebensdauer zu erhöhen. Es wird eine doppelte Lagerung mit einer großen Abstützbasis erreicht. Dadurch, daß die Lagerung an dem steifen Gehäuse abgestützt ist, können sich auch keine negativen Auswirkungen auf die Lagerung der einzelnen Getriebeteile selbst ergeben.

Bevorzugt weist der Haltebügel ein erstes Lagermittel auf, das mit einem der Traverse zugehörigen zweiten Lagermittel zusammenwirkt. Diese können dabei als Lagerzapfen und Lagerbuchse ausgestaltet sein. Eine besonders günstige Gestaltung und besonders kleine Hebelarme, die eine Biegebeanspruchung erzeugen können, werden dadurch erreicht, daß der Haltebügel mit einem Ende einem der beiden Winkelgetriebe des Doppelgetriebes fest zugeordnet ist. Bevorzugt ist der Haltebügel nach einem weitergehenden Vorschlag mit dem äußeren Lagerelement der Lagerung zwischen den beiden Winkelgetrieben fest verbunden.

Eine besonders günstige Anordnung ergibt sich in Weiterbildung der Erfindung dadurch, daß der Haltebügel mit einem Ende mit dem Winkelgetriebe verbunden ist, das den Antriebszapfen zur Verbindung mit der Zapfwelle des Traktors aufweist, und daß das andere Winkelgetriebe mit dem anzuhängenden Gerät fest verbunden ist.

Ein bevorzugtes Ausführungsbeispiel der Erfindung ist in der Zeichnung dargestellt und anhand derselben beschrieben. Es zeigt
- Figur 1: eine Seitenansicht auf einen Traktor mit dem über die erfindungsgemäße Vorrichtung angehängten Gerät,
- Figur 2: eine Draufsicht zu Figur 1 und
- Figur 3: eine Ansicht des Doppelgetriebes mit Blickrichtung auf den Haltebügel und
- Figur 4: eine geschnittene Seitenansicht des Doppelgetriebes mit Traverse.

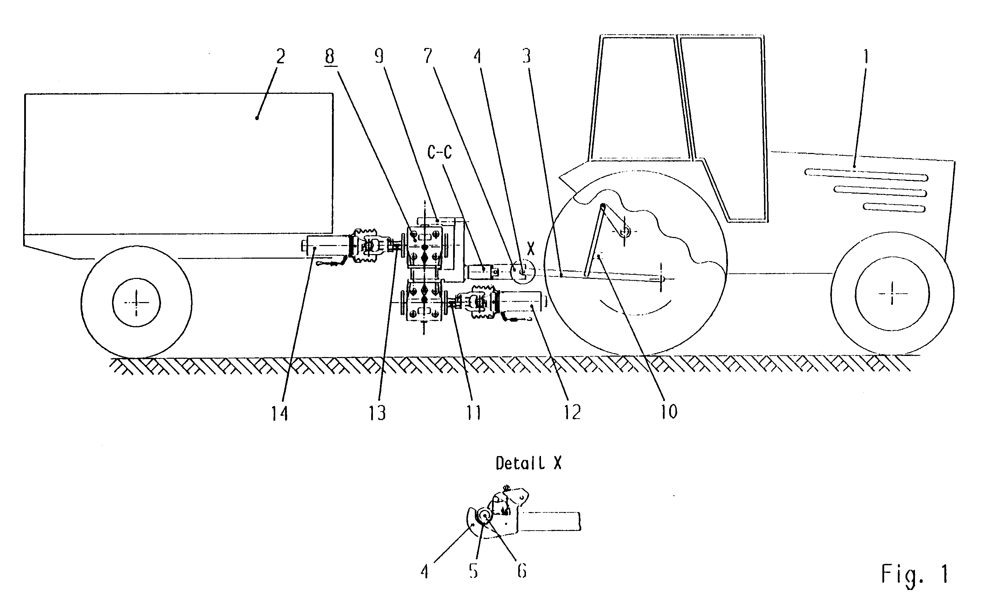

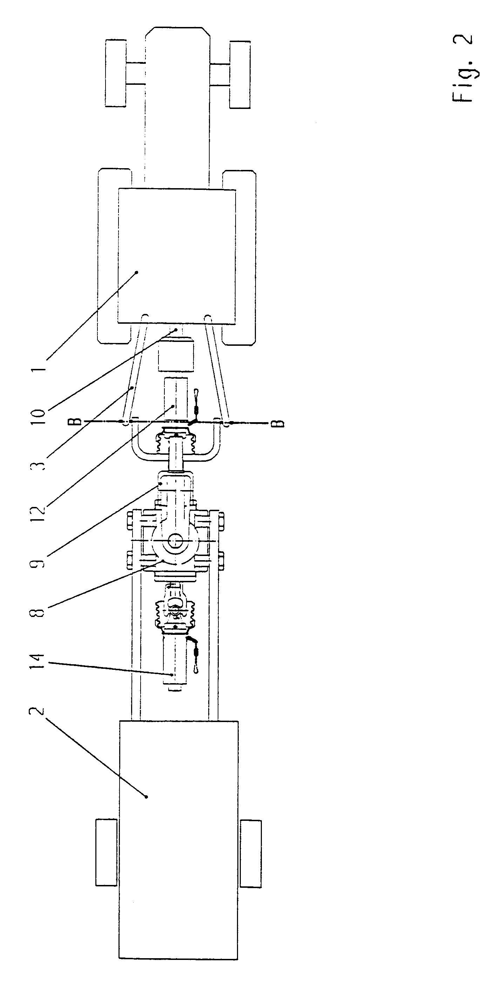

Aus den Figuren 1 und 2 ist erkennbar, daß an den Traktor 1 das Gerät 2 angehängt ist. Die Anhängung des Gerätes 2 erfolgt an die Unterlenker 3 des Traktors. Dem Gerät 2 ist ein Doppelgetriebe 8 zugeordnet, das mit einer Traverse 7 versehen ist, welche seitlich sich erstreckende Zapfen 6 mit darauf angebrachten Kugeln als Zentrierelementen 5 aufweist. Diese Kugeln 5 sind in den Fanghaken 4 der Unterlenker 3 des Traktors 1 zentriert aufgenommen. Sie lassen eine Verschwenkung der Traverse 7 um eine Achse B-B (s. Fig. 2) zu, welche quer zur Längsachse des Traktors 1 verläuft. Ferner ist erkennbar, daß von der Zapfwelle 10 des Traktors 1 die Drehbewegung über eine Antriebswelle 12 auf den Antriebszapfen 11 des Doppelgetriebes 8 weitergeleitet wird. Ferner weist das Doppelgetriebe 8 einen Abtriebszapfen 13 auf, der zum Antrieb des Gerätes über eine Welle 14 dient. Das Doppelgetriebe 8 ist über einen Haltebügel 9 um die Achse C-C schwenkbeweglich mit der Traverse 7 verbunden.

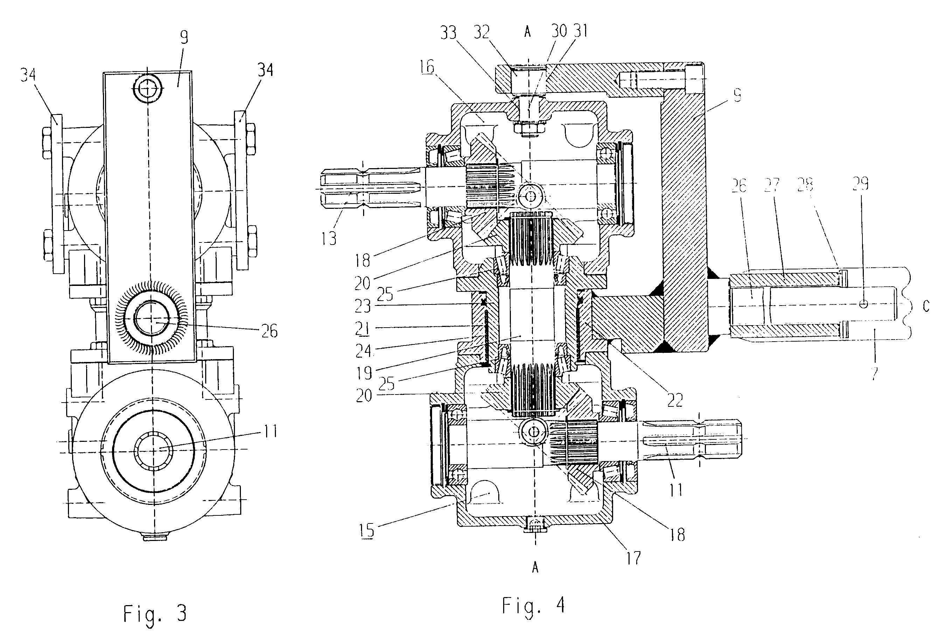

Aus den Figuren 1, 2 und insbesondere aus Figur 3 ist erkennbar, daß das Doppelgetriebe 8 aus zwei in Übereinanderanordnung befindlichen Winkelgetrieben 15, 16 besteht, von denen das Winkelgetriebe 15 die untere Position einnimmt. Die beiden Winkelgetriebe 15, 16 sind im wesentlichen identisch ausgebildet und miteinander über eine Lagerung 21 verbunden.

Beide Winkelgetriebe 15, 16 weisen jeweils ein Gehäuse 17 auf. Für das Winkelgetriebe 15 ist der Getriebeeingang der Antriebszapfen 11, der über die Zapfwelle 10 des Traktors 1 angetrieben wird. Der Antriebszapfen 11 ist über Lager im Gehäuse 17 gelagert. Er trägt das Kegelrad 18, das mit dem zweiten Kegelrad 20 kämmt. Dieses zweite Kegelrad 20 sitzt auf einer Zwischenwelle 19, welche an ihrem anderen Ende ein weiteres Zwischenkegelrad 20 trägt, das mit dem zum zweiten Winkelgetriebe 16 gehörenden Kegelrad 18, welches dem Abtriebszapfen 13 zugeordnet ist, in Eingriff ist. Die Zwischenwelle 19 ist in der Lagerung 21 aufgenommen. Die Lagerung 21 besteht aus dem äußeren Lagerelement 22, welches in einem Teilbereich hülsenförmig gestaltet ist und zum Gehäuse 17 des Winkelgetriebes 15 hin flanschartig ausgebildet ist und mit dem Gehäuse 17 fest verbunden ist. In der Bohrung des äußeren Lagerelementes 22 ist eine Lagerbuchse 24 aufgenommen, die günstige Reibeigenschaften aufweist und in welcher das innere, hülsenförmig mit einem Flansch gestaltete Lagerelement 23 drehbar gehalten ist. Das innere Lagerelement 23 ist fest mit dem Gehäuse 17 des zweiten Winkelgetriebes 16 verbunden. Die Zwischenwelle 19 ist über Kegelrollenlager 25 in dem inneren Lagerelement 23 drehbar aufgenommen. Am äußeren Lagerelement 22 ist der Haltebügel 9 fest, beispielsweise durch Schweißung angebracht. Der Haltebügel 9 ist als eine Art Winkelhebel gestaltet. Dessen abgewinkelter Schenkel besitzt eine Bohrung 31, deren Achse auf der ersten Achse A-A zentriert ist. In die Bohrung 31 ist ein Wälzlager 32 eingesetzt, das einen Stützzapfen 30 aufnimmt. Der Stützzapfen 30 ist in eine Bohrung 33 des Gehäuses 17 des Winkelgetriebes 16 eingesetzt und über einen Gewindezapfen mit Mutter am Gehäuse 17 festgelegt. Der Haltebügel 9 trägt einen Lagerzapfen 26, der in eine Bohrung der Lagerbuchse 27 eingesteckt ist. Die Lagerbuchse 27 ist Bestandteil der Traverse 7. Die Sicherung des Haltebügels 9 bzw. dessen Zapfen 26 erfolgt der Lagerbuchse 27 gegenüber durch eine Sicherungsscheibe 28, die von einem den Lagerzapfen 26 durchsetzenden Sicherungsstift 29 gehalten ist. Das Gehäuse 17 des oberen Winkelgetriebes 16 ist mit Anschlußbohrungen versehen, die zur Befestigung des Gehäuses 17 an dem anzuhängenden Gerät 2 dienen. Hierzu wird beispielsweise das Getriebegehäuse 17 beidseitig von Laschen 34, die dem Gerät 2 zugeordnet sind, eingeschlossen. Die Festlegung erfolgt durch Schrauben 35.

### Bezugszeichenliste

- 1: Traktor
- 2: Gerät
- 3: Unterlenker
- 4: Fanghaken
- 5: Kugel
- 6: Zapfen
- 7: Traverse
- 8: Doppelgetriebe
- 9: Haltebügel
- 10: Zapfwelle
- 11: Antriebszapfen
- 12: Antriebswelle
- 13: Abtriebszapfen
- 14: Welle
- 15, 16: Winkelgetriebe
- 17: Gehäuse
- 18: Kegelrad
- 19: Zwischenwelle
- 20: Zwischenkegelräder
- 21: Lagerung
- 22: äußeres Lagerelement
- 23: inneres Lagerelement
- 24: Lagerbuchse
- 25: Kegelrollenlager
- 26: Lagerzapfen
- 27: Lagerbuchse
- 28: Sicherungsscheibe
- 29: Sicherungsstift
- 30: Stützzapfen
- 31: Bohrung
- 32: Wälzlager
- 33: Bohrung
- 34: Lasche
- 35: Schrauben
- A-A: erste Achse
- B-B: zweite Achse
- C-C: dritte Achse

## Patentansprüche

1. Vorrichtung zum Verbinden eines landwirtschaftlichen Gerätes mit einem Traktor (1), von dem es gezogen und durch eine Zapfwelle (10) angetrieben wird, mit einem Doppelgetriebe (8), das zwei übereinander angeordnete und zueinander über eine Lagerung (21) um eine erste Achse (A-A) verschwenkbare und drehmäßig verbundene Winkelgetriebe (15, 16) umfaßt, wobei ein Winkelgetriebe (15) einen Antriebszapfen (11) zur Verbindung mit der Zapfwelle (10) des Traktors (1) mittels einer Antriebswelle (12) und das andere Winkelgetriebe (16) einen dazu parallelen Abtrieb (13) zur Weiterleitung der Drehbewegung an das Gerät (2) aufweist, mit einer Traverse (7), die zur schwenkbaren Verbindung des Doppelgetriebes (8) mit den Unterlenkern (3) des Traktors (1) um eine die erste Achse (A-A) mit Abstand in einem rechten Winkel kreuzende zweite Achse (B-B) dient, mit Mitteln zur Verbindung des Doppelgetriebes (8) mit dem Gerät (2) und mit Mitteln, die ein Verschwenken des Gerätes (2) um eine dritte Achse (C-C), die jeweils die beiden anderen Achsen (A-A, B-B) kreuzt, zulassen,
dadurch gekennzeichnet,
daß ein Haltebügel (9) vorgesehen ist, daß der Haltebügel (7) derart mit dem Doppelgetriebe (8) verbunden ist, daß mindestens eines der beiden Winkelgetriebe (15, 16) zum Haltebügel (9) um die erste Achse (A-A) verschwenkbar ist, daß der Haltebügel (9) mit einem Ende an der Lagerung (21) der beiden Winkelgetriebe (15, 16) des Doppelgetriebes (8) angebracht ist, eines der beiden Winkelgetriebe (16) übergreift und das andere mit diesem Winkelgetriebe (16) durch eine Stützlagerung (30, 31, 32) verbunden ist, welche eine Relativverschwenkung des Winkelgetriebes (16) zu dem Haltebügel (9) um die erste Achse (A-A) zuläßt, und daß der Haltebügel (9) mit der Traverse (7) um die dritte Achse (C-C) schwenkbar verbunden ist.

2. Vorrichtung nach Anspruch 1,
dadurch gekennzeichnet,
daß der Haltebügel (9) ein erstes Lagermittel (26) aufweist, das mit einem der Traverse (7) zugehörigen zweiten Lagermittel (27) zusammenarbeitet.

3. Vorrichtung nach Anspruch 2,
dadurch gekennzeichnet,
daß als Lagermittel ein Lagerzapfen (26) und eine Lagerbuchse (27) dienen.

4. Vorrichtung nach Anspruch 2,
dadurch gekennzeichnet,
daß der Haltebügel (7) mit einem Ende einem der beiden Winkelgetriebe (15, 16) des Doppelgetriebes (8) fest zugeordnet ist.

5. Vorrichtung nach Anspruch 4,
dadurch gekennzeichnet,
daß der Haltebügel (7) mit dem äußeren Lagerelement (22) der Lagerung (21) zwischen den beiden Winkelgetrieben (15, 16) fest verbunden ist.

6. Vorrichtung nach Anspruch 4,
dadurch gekennzeichnet,
daß der Haltebügel (7) mit einem Ende mit dem Winkelgetriebe (15) verbunden ist, das den Antriebszapfen (11) zur Verbindung mit der Zapfwelle (10) des Traktors (1) aufweist, und daß das andere Winkelgetriebe (16) zur festen Verbindung mit dem anzuhängenden Gerät (2) ausgebildet ist.

## Claims

1. A device for connecting an agricultural implement to a tractor (1) by which it is pulled and driven by a power take-off shaft (10), having a double drive (8) comprising two angle drives (15, 16) which are arranged one above the other, which are rotationally connected to one another and pivotable relative to one another by a bearing (21) around a first axis (A-A), with one angle drive (15) comprising a driving journal (11) for being connected to the power take-off shaft (10) of the tractor (1) by means of a driveshaft (12) and with the other angle drive (16) comprising output means (13) arranged parallel thereto and passing on the rotational movement to the implement (2); having a transverse bar (7) which serves to pivotably connect the double drive (8) to the lower steering arms (3) of the tractor (1) around a second axis (B-B) which intersects the first axis (A-A) at a distance at a right angle; having means for connecting the double drive (8) to the implement (2) and means which permit the implement (2) to be pivoted around a third axis (C-C) intersecting each of the two other axes (A-A, B-B),
characterised in
that there is provided a holding clip (9); that the holding clip (7) is connected to the double drive (8) in such a way that at least one of the two angle drives (15, 16) is pivotable relative to the holding clip (9) around the first axis (A-A); that the one end of the holding clip (9) is attached to the bearing (21) of the two angle drives (15, 16) of the double drive (8) and extends over one of the two angle drives (16), with the other end being connected to said angle drive (16) by means of a supporting bearing (30, 31, 32) which permits the angle drive (16) to pivot relative to the holding clip (9) around the first axis (A-A); and that the holding clip (9) is connected to the transverse bar (7) to be pivoted around the third axis (C-C).

2. A drive according to claim 1,
characterised in
that the holding clip (9) comprises first bearing means (26) which cooperate with second bearing means (27) associated with the transverse bar (7).

3. A drive according to claim 2,
characterised in
that the bearing means are provided in the form of a bearing journal (26) and a bearing bush (27).

4. A device according to claim 2,
characterised in
that one end of the holding clip (7) is firmly associated with one of the two angle drives (15, 16) of the double drive (8).

5. A device according to claim 4,
characterised in
that the holding clip (8) is firmly connected to the outer bearing element (22) of the bearing (21) between the two angle drives (15, 16).

6. A device according to claim 4,
characterised in
that the holding clip (7), at one end, is connected to the angle drive (15) which comprises the driving journal (11) for being connected to the power take-off shaft (10) of the tractor (1) and that the other angle drive (16) is designed to be firmly connected to the implement (2) to be attached.

## Revendications

1. Dispositif pour accoupler un appareil agricole à un tracteur (1) par lequel il est tiré en même temps qu'il est entraîné par l'intermédiaire d'un arbre de prise de force (10), ce dispositif comprenant un double mécanisme de transmission (8) qui comprend deux renvois d'angle (15, 16) disposés l'un au-dessus de l'autre montés pour pouvoir pivoter l'un par rapport a l'autre autour d'un premier axe (A-A), au moyen d'un palier (21), un renvoi d'angle (15) présentant un bout d'arbre d'entrée (11), destiné à être accouplé à l'arbre de prise de force (10) du tracteur (1) au moyen d'un arbre d'entrée (12), et l'autre renvoi d'angle (16) présentant une sortie (13) parallèle à l'entrée, et servant à transmettre le mouvement de rotation à l'appareil (2), ce dispositif comprenant aussi une traverse (7) qui sert à relier le double mécanisme de transmission (8) aux bras inférieurs (3) du tracteur (1) d'une façon qui lui permet de pivoter autour d'un deuxième axe (B) qui croise le premier axe (A-A) à angle droit à une certaine distance, et des moyens servant à accoupler le double mécanisme de transmission (8) à l'appareil (2) et des moyens qui permettent à l'appareil (2) de pivoter autour d'un troisième axe (C-C) qui croise les deux autres axes (A-A, B-B),
caractérisé
en ce qu'il est prévu un étrier de fixation (9), en ce que l'étrier de fixation (7) est relié au double mécanisme de transmission (8) de telle manière qu'au moins l'un des deux renvois d'angle (15, 16) puisse pivoter autour du premier axe (A-A) par rapport à l'étrier de fixation (9), en ce que l'étrier de fixation (9) est monté par une extrémité sur le palier (21) des deux renvois d'angle (15, 16) du double mécanisme de transmission (8), qu'il enfourche l'un des deux renvois d'angle (16), tandis que l'autre extrémité est assemblée à ce renvoi d'angle (16) par un palier d'appui (30, 31, 32) qui admet un pivotement relatif du renvoi d'angle (16) par rapport à l'étrier de fixation (9) autour du premier axe (A-A), et en ce que l'étrier de fixation (9) est relié à la traverse (7) de manière à pouvoir pivoter autour du troisième axe (C-C).

2. Dispositif selon la revendication 1,
caractérisé
en ce que l'étrier de fixation (9) présente un premier moyen de portée (26) qui coopère avec un deuxième moyen de portée (27) appartenant à la traverse (7).

3. Dispositif selon la revendication 2,
caractérisé
en ce qu'il utilise comme moyens de portée un tourillon (26) et un coussinet (27).

4. Dispositif selon la revendication 2,
caractérisé
en ce que l'étrier de fixation (7) est associé rigidement par une des extrémités à l'un des deux renvois d'angle (15, 16) du double mécanisme de transmission (8).

5. Dispositif selon la revendication 4,
caractérisé
en ce que l'étrier de fixation (7) est rigidement solidaire de l'élément de palier extérieur (22) du palier (21) entre les deux renvois d'angle (15, 16).

6. Dispositif selon la revendication 4,
caractérisé
en ce que l'étrier de fixation (7) est solidaire, par une extrémité, du renvoi d'angle (15) qui présente le bout d'arbre d'entrée (11) destiné à s'accoupler à l'arbre de prise de force (10) du tracteur (1) et en ce que l'autre renvoi d'angle (16) est constitué de manière à être assemblé rigidement à l'appareil (2) à atteler.
